# EUROPÄISCHE PATENTSCHRIFT

(11) **EP 2 250 467 B1**
(45) Veröffentlichungstag und Bekanntmachung des Hinweises auf die Patenterteilung: **13.09.2017**
(21) Anmeldenummer: 09718367.7
(22) Anmeldetag: 06.03.2009
(51) Int. Cl.: G01D 5/14

(54) **MAGNETISCHER WEGSENSOR**
MAGNETIC DISPLACEMENT SENSOR
CAPTEUR DE DÉPLACEMENT MAGNÉTIQUE

(30) Priorität: 07.03.2008 DE 102008013286
(43) Veröffentlichungstag der Anmeldung: 17.11.2010
(73) Patentinhaber: Conti Temic Microelectronic GmbH, 90411 Nürnberg (DE)
(72) Erfinder: HINKEL, Gerhard, 91338 Igensdorf (DE); NAGEL, Michael, 90455 Nürnberg (DE); SEITZ, Bernd, 90482 Nürnberg (DE); SCHULZE, Andreas, 91207 Lauf (DE); POHLMANN, Roger, 90765 Fürth-Stadeln (DE)
(74) Vertreter: Bonn, Roman Klemens
(86) Internationale Anmeldenummer: PCT/DE2009/000297
(87) Internationale Veröffentlichungsnummer: WO 2009/109177

(56) Entgegenhaltungen:
- EP-A- 1 553 387
- WO-A-02/21080
- WO-A-2004/074853

## Beschreibung

Die Erfindung betrifft einen magnetischen Wegsensor gemäß dem Oberbegriff des Anspruchs 1.

Bekannte magnetische Wegsensoren werden zur berührungslosen Wegmessung eingesetzt. Diese weisen einen Magnetgeber und einen magnetischen Flussdichtesensor auf, die im Abstand eines Luftspaltes voneinander angeordnet und relativ zueinander bewegbar sind. Der Magnetgeber weist zwei auf einem Magnetträger angeordnete Magnete auf, die quaderförmig ausgebildet sind. Der magnetische Flussdichtesensor wertet die z-Komponente der Flussdichte aus und liefert so ein Maß für den zu messenden Weg. Der zu messende Weg soll möglichst genau bestimmt werden können, so dass bei magnetischen Wegsensoren ein ständiger Wunsch nach einem verbesserten Messverhalten besteht. WO2004074853 beschreibt einen Positionssensor mit einem profilierten Magnetgeber. Der Erfindung liegt daher die Aufgabe zugrunde, einen magnetischen Wegsensor mit einem verbesserten Messverhalten zu schaffen.

Diese Aufgabe wird durch einen magnetischen Wegsensor mit den Merkmalen des Anspruchs 1 gelöst. Erfindungsgemäß wurde erkannt, dass durch eine gezielte Formgebung der Magnete in Richtung der x-Achse (x-Richtung) und in Richtung der y-Achse (y-Richtung) ein verbessertes Messverhalten erzielbar ist. Durch die gezielte Formgebung in x-Richtung kann die z-Komponente der Flussdichte im Bereich des Hubes in x-Richtung des Wegsensors linearisiert werden. Der Wegsensor weist so eine lineare Kennlinie für die z-Komponente mit einer zulässigen maximalen Flussdichte innerhalb des gewünschten Hubes auf. Hierdurch kann an jeder Stelle des Hubes die gleiche maximale Auflösung des Wegsensors gewährleistet werden. Weiterhin können auf der Wegmessung basierende Regelsysteme einfacher ausgelegt werden, da die Kennlinie linear verläuft. Durch die gezielte Formgebung in y-Richtung kann im Bereich des durch Einbautoleranzen verursachten Querversatzes in y-Richtung erzielt werden, dass die z-Komponente im Wesentlichen konstant ist. Die lineare Kennlinie ist also im Wesentlichen unabhängig von dem Querversatz der Magnete in y-Richtung. Hierdurch wird eine hohe Robustheit und Unempfindlichkeit gegenüber Einbautoleranzen erzielt.

Der Wegsensor stellt eine einfache Formgebung in x-Richtung bereit. Dadurch, dass die z-Abmessung der Magnete, also die Magnetdicke, in Richtung zu der y-Achse hin abnimmt, weisen die Magnete an dem der y-Achse abgewandtem Rand eine größere Magnetdicke als an dem der y-Achse zugewandtem Rand auf. Hierdurch wird die Abflachung der Kennlinie der z-Komponente an den Rändern des Hubes kompensiert.

Der Wegsensor stellt eine einfache Formgebung in y-Richtung bereit. Dadurch, dass die z-Abmessung der Magnete, also die Magnetdicke, in Richtung zu der x-Achse hin abnimmt, weisen diese an den der x-Achse abgewandten Rändern eine größere Magnetdicke als im Bereich der x-Achse auf. Hierdurch wird ein Abfall der z-Komponente der Flussdichte zu den Rändern hin kompensiert, wodurch die Kennlinie der z-Komponente im Wesentlichen unabhängig von der Position der Magnete in y-Richtung ist. Ein Querversatz der Magnete führt somit zu keiner Änderung der z-Komponente, da deren Kennlinie im Wesentlichen in y-Richtung konstant ist.

Ein Wegsensor nach einem der Ansprüche 2 bis 4 ist einfach herstellbar. Ein Wegsensor nach Anspruch 5 stellt eine einfach herstellbare Formgebung in x- und y-Richtung bereit.

Ein Wegsensor nach Anspruch 6 weist einen verbesserten Feldverlauf der z-Komponente auf, da die Magnete in z-Richtung spitz zulaufen.

Ein Wegsensor nach Anspruch 7 weist einen definierten Feldverlauf der z-Komponente auf und ist gleichzeitig einfach herstellbar, da die Magnete in z-Richtung spitz zulaufen und einen schmalen und einfach herzustellenden Rand aufweisen.

Ein Wegsensor nach Anspruch 8 ermöglicht eine definierte Einstellung der z-Komponente in x- und y-Richtung. Die Innenprofilkante kann hierbei insbesondere konkav oder konvex verlaufen.

Ein Wegsensor nach Anspruch 9 ermöglicht einen definierten und nach Bedarf einstellbaren Feldverlauf bei gleichzeitig einfacher Herstellbarkeit der Magnete.

Ein Wegsensor nach Anspruch 10 ermöglicht eine voneinander unabhängige Formgebung in x- und y-Richtung. Die Innenprofilkanten haben vorzugsweise die gleiche Form und sind beispielsweise linear ausgebildet. Der Pfad kann beispielsweise eine Rechteckhälfte, ein Halbkreis oder eine Ellipsenhälfte sein. Bei der Rechteckhälfte ist der Übergang zwischen den Querschnittsprofilen diskret oder kontinuierlich. Bei dem Halbkreis oder der Ellipsenhälfte ist der Übergang zwischen den Querschnittsprofilen kontinuierlich. Die Querschnittsprofile können entsprechend den Ansprüchen 7 bis 11 ausgebildet sein.

Ein Wegsensor nach Anspruch 11 weist eine hohe mechanische Stabilität auf.

Ein Wegsensor nach Anspruch 12 ist einfach aufgebaut. Insbesondere wird kein gemeinsamer Träger für die Magnete benötigt, da diese selbsttragend sind.

Ein Wegsensor nach Anspruch 13 erhöht das Nutzfeld auf der Seite des Flussdichtesensors.

Ein Wegsensor nach Anspruch 15 ist einfach und kompakt aufgebaut. Insbesondere liegt im Bereich des Flussdichtesensors ein hohes Nutzfeld vor, wodurch Magnetmaterial eingespart werden kann.

Weitere Merkmale, Vorteile und Einzelheiten der Erfindung ergeben sich aus der nachfolgenden Beschreibung mehrerer Ausführungsbeispiele. Es zeigen:
- Figur 1: eine Seitenansicht eines magnetischen Wegsensors gemäß einem ersten Ausführungsbeispiel,
- Figur 2: eine Teildraufsicht auf einen Magnetgeber des Wegsensors in Figur 1,
- Figur 3: eine perspektivische Ansicht des Magnetgebers in Figur 2,
- Figur 4: eine Kennlinie der z-Komponente der Flussdichte,
- Figur 5: eine perspektivische Ansicht eines Magnets gemäß Figur 1 ,
- Figur 6: eine Draufsicht auf den Magnet in Figur 5,
- Figur 7: eine perspektivische Ansicht zweier Magnete gemäß einem zweiten Ausführungsbeispiel,
- Figur 8: eine perspektivische Ansicht eines Magnets gemäß einem dritten Ausführungsbeispiel,
- Figur 9: eine perspektivische Ansicht eines Magnets gemäß einem vierten Ausführungsbeispiel,
- Figur 10: eine perspektivische Ansicht eines Magnets gemäß einem fünften Ausführungsbeispiel,
- Figur 11: eine perspektivische Ansicht eines Magnets gemäß einem sechsten Ausführungsbeispiel,
- Figur 12: eine perspektivische Ansicht eines Magnets gemäß einem siebten Ausführungsbeispiel, und
- Figur 13: eine perspektivische Ansicht eines Magnets gemäß einem achten Ausführungsbeispiel.

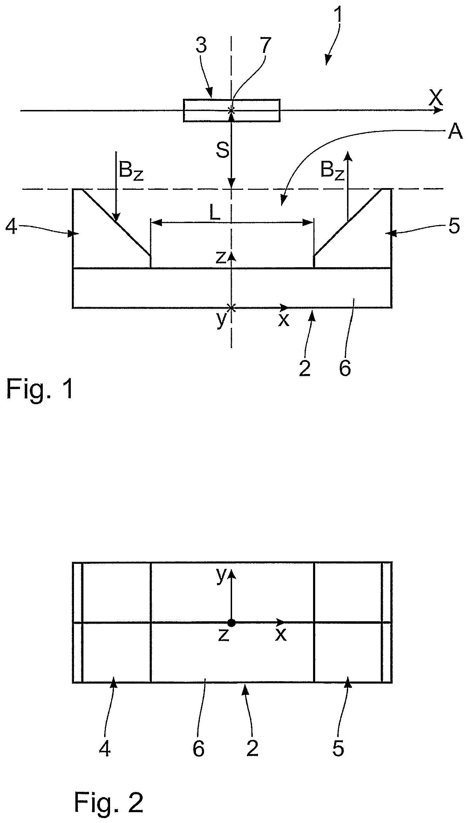

Nachfolgend wird unter Bezugnahme auf die Figuren 1 bis 6 ein erstes Ausführungsbeispiel der Erfindung beschrieben. Ein magnetischer Wegsensor 1 weist einen Magnetgeber 2 und einen zugehörigen magnetischen Flussdichtesensor 3 auf. Der Magnetgeber 2 weist zur Ausbildung eines Magnetfeldes einen ersten als Permanentmagnet ausgebildeten Magnet 4 und einen zweiten als Permanentmagnet ausgebildeten Magnet 5 auf, die in einem - in den Figuren 1 und 2 gezeigten - Ruhezustand im Wesentlichen mittig entlang einer x-Achse auf einem Magnetträger 6 angeordnet sind. Darüber hinaus sind die Magnete 4, 5 in dem Ruhezustand achsensymmetrisch zu einer y-Achse auf dem Magnetträger 6 angeordnet. Die y-Achse verläuft somit in dem Ruhezustand im Wesentlichen mittig zwischen den Magneten 4, 5. Die Magnete 4, 5 weisen in Richtung der x-Achse (nachfolgend x-Richtung) einen Magnetabstand L auf. In Richtung einer senkrecht zu der x- und y-Achse verlaufenden z-Achse ist der Flussdichtesensor 3 von dem Magnetgeber 2 beabstandet. Der Abstand wird als Luftspalt S bezeichnet. Der Flussdichtesensor 3 ist als Hall-Sensor ausgebildet und weist einen im Ruhezustand auf der z-Achse liegenden sensitiven Bereich 7 zur Messung einer in Richtung der z-Achse (nachfolgend z-Richtung) verlaufenden z-Komponente der Flussdichte des Magnetfeldes auf. Die z-Komponente wird nachfolgend als B_{z} bezeichnet.

Der Magnetträger 6 ist aus einem weichmagnetischen Material und verstärkt das Nutzfeld, also die z-Komponente B_{z}, auf der Seite des Flussdichtesensors 3.

Der Magnetgeber 2 und der Flussdichtesensor 3 sind relativ zueinander in der x-Richtung verschiebbar, wobei der Flussdichtesensor 3 in unterschiedlichen x-Positionen unterschiedliche z-Komponenten misst. Auf diese Weise ist mittels des Wegsensors 1 eine Messung des Weges X in x-Richtung über einen Hub ΔX des Wegsensors 1 möglich.

Die Magnete 4, 5 definieren einen Aufnahmeraum A. Der Flussdichtesensor 3 ist außerhalb des Aufnahmeraumes A angeordnet. Alternativ kann dieser teilweise in dem Aufnahmeraum A angeordnet sein.

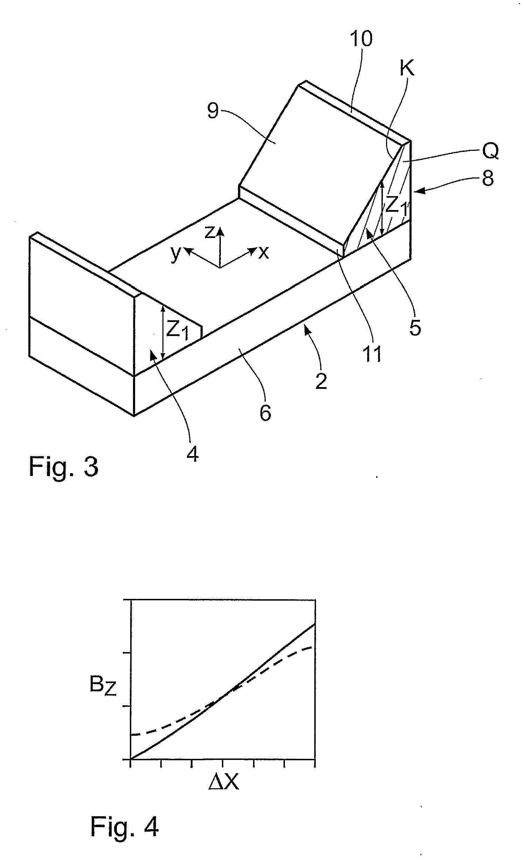

Die Magnete 4, 5 sind in x-Richtung derart geformt, dass die z-Komponente B_{z} im Bereich des Hubes ΔX eine im Wesentlichen lineare Kennlinie aufweist, wie dies in Figur 4 dargestellt ist. Die Magnete 4, 5 sind hierzu keilförmig ausgebildet, so dass eine in der z-Richtung verlaufende erste z-Abmessung Z₁ der Magnete 4, 5 in Richtung zu der y-Achse hin abnimmt. Jeder Magnet 4, 5 bildet einen Profilkörper 8 aus, der ein zugehöriges Querschnittsprofil Q mit einer Innenprofilkante K aufweist. Das Querschnittsprofil Q ist ein Fünfeck mit drei rechten Winkeln. Die zugehörige Innenprofilkante K verläuft linear. Der Profilkörper 8 ist somit als Keil mit einer in einem spitzen Winkel zu der x-y-Ebene verlaufenden Schrägfläche 9 sowie einer parallel zu der x-y-Ebene verlaufenden ersten Randfläche 10 und einer parallel zu der y-z-Ebene verlaufenden zweiten Randfläche 11 ausgebildet.

Dadurch, dass die Magnete 4, 5 im Bereich der ersten Randfläche 10 eine größere z-Abmessung Z₁, also eine größere Materialdicke, als im Bereich der zweiten Randfläche 11 aufweisen, wird über den Hub ΔX ein linearer Verlauf der z-Komponente B_{z} erzielt. In Figur 4 ist der durch die erfindungsgemäßen Magnete 4, 5 erzielte lineare Verlauf durchgezogen dargestellt, wohingegen der von herkömmlichen Wegsensoren erzielte Verlauf gestrichelt dargestellt ist.

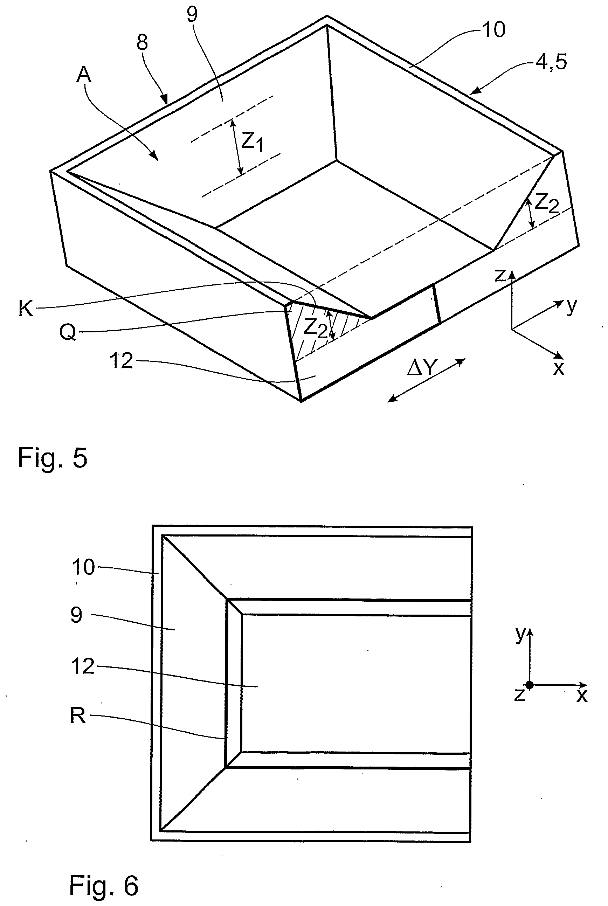

Die Magnete 4, 5 in den Figuren 5 und 6 weisen einen Boden 12 und den darauf angeordneten Profilkörper 8 auf. Diese sind einstückig miteinander ausgebildet. Die Magnete 4, 5 sind wie in den Figuren 1 bis 4 in der x-Richtung derart geformt, dass die z-Komponente B_{z} im Bereich des Hubes ΔX eine im Wesentlichen lineare Kennlinie aufweist. Darüber hinaus sind die Magnete 4, 5 in Richtung der y-Achse (nachfolgend y-Richtung) derart geformt, dass die z-Komponente B_{z} im Bereich eines Querversatzes ΔY in y-Richtung im Wesentlichen konstant ist. Hierzu ist jeder Magnet 4, 5 in y-Richtung derart geformt, dass eine in der z-Richtung verlaufende zweite z-Abmessung Z₂ zu der x-Achse hin abnimmt. Der Profilkörper 8 wird derart gebildet, dass das Querschnittsprofil Q, das ein Viereck mit zwei rechten Winkeln und einer linearen Innenprofilkante K ist, entlang eines Pfades in Form einer Rechteckhälfte R gezogen wird. Somit ergibt sich eine U-förmige Schrägfläche 9 und eine U-förmige erste Randfläche 10.

Die Magnete 4, 5 definieren den Aufnahmeraum A, der durch den Profilkörper 8 und den Boden 12 begrenzt ist. Der Flussdichtesensor 3 kann entweder im Abstand S außerhalb des Aufnahmeraumes A angeordnet sein. Alternativ kann der Flussdichtesensor 3 zumindest teilweise in dem Aufnahmeraum A angeordnet sein.

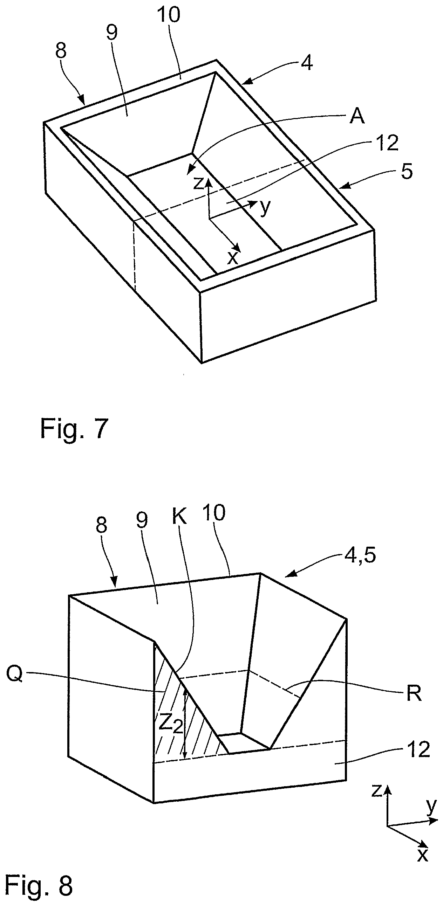

Nachfolgend wird unter Bezugnahme auf Figur 7 ein zweites Ausführungsbeispiel der Erfindung beschrieben. Im Unterschied zum ersten Ausführungsbeispiel sind die Magnete 4, 5 einstückig ausgebildet. Hinsichtlich der weiteren Funktionsweise wird auf das vorangegangene Ausführungsbeispiel verwiesen.

Nachfolgend wird unter Bezugnahme auf Figur 8 ein drittes Ausführungsbeispiel der Erfindung beschrieben. Im Unterschied zu dem zweiten Ausführungsbeispiel ist das Querschnittsprofil Q ein Dreieck. Hierdurch ergibt sich, dass die erste Randfläche 10 eine - mathematisch betrachtet - U-förmige Kante ergibt. Der Feldverlauf kann hierdurch verbessert werden.

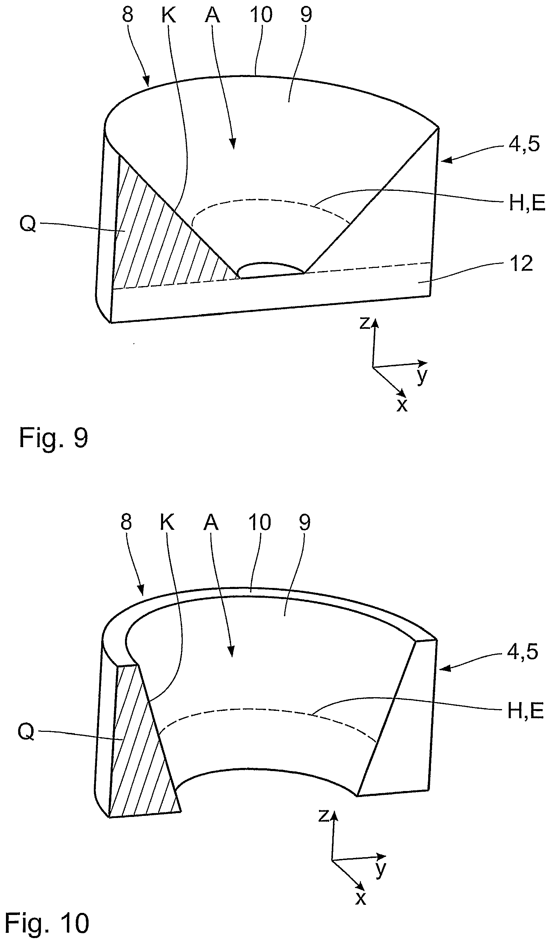

Nachfolgend wird unter Bezugnahme auf Figur 9 ein viertes Ausführungsbeispiel der Erfindung beschrieben. Im Unterschied zu den vorangegangenen Ausführungsbeispielen wird der Profilkörper 8 derart erzeugt, dass das dreieckförmige Querschnittsprofil Q mit der linearen Innenprofilkante K entlang eines Halbkreises H gezogen wird. Alternativ kann das Querschnittsprofil Q entlang einer Ellipsenhälfte E gezogen werden. Hinsichtlich der weiteren Funktionsweise wird auf die vorangegangenen Ausführungsbeispiele verwiesen.

Nachfolgend wird unter Bezugnahme auf Figur 10 ein fünftes Ausführungsbeispiel der Erfindung beschrieben. Im Unterschied zu den vorangegangenen Ausführungsbeispielen weisen die Magnete 4, 5 keinen Boden auf. Der Profilkörper 8 entspricht somit den Magneten 4, 5. Das Querschnittsprofil Q, das ein Viereck mit zwei rechten Winkeln und einer linearen Innenprofilkante K ist, wird entlang des Halbkreises H gezogen. Alternativ kann das Querschnittsprofil Q entlang der Ellipsenhälfte E gezogen werden. Hinsichtlich der weiteren Funktionsweise wird auf die vorangegangenen Ausführungsbeispiele verwiesen.

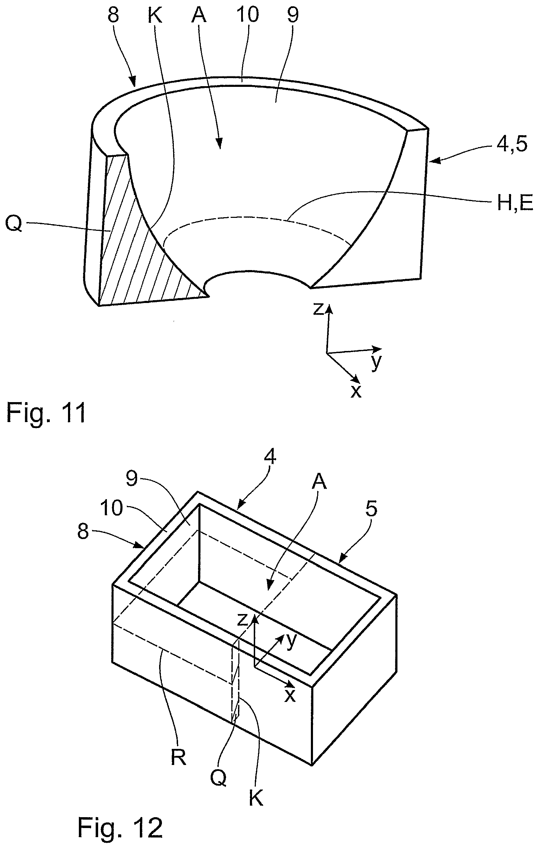

Nachfolgend wird unter Bezugnahme auf Figur 11 ein sechstes Ausführungsbeispiel der Erfindung beschrieben. Im Unterschied zu den vorangegangenen Ausführungsbeispielen weist das Querschnittsprofil Q, das als Viereck mit zwei rechten Winkeln ausgebildet ist, eine nichtlineare Innenprofilkante K auf. Die Innenprofilkante K verläuft mit zunehmendem Abstand von der x- und/oder y-Achse zunehmend steiler. Hinsichtlich der weiteren Funktionsweise wird auf die vorangegangenen Ausführungsbeispiele verwiesen.

Nachfolgend wird unter Bezugnahme auf Figur 12 ein siebtes Ausführungsbeispiel der Erfindung beschrieben. Im Unterschied zu den vorangegangenen Ausführungsbeispielen ist der Profilkörper 8 derart gebildet, dass das Querschnittsprofil Q die Form eines Rechteckes mit einer linearen Innenprofilkante K aufweist, wobei dieses entlang der Rechteckhälfte R gezogen wird. Die Magnete 4, 5 sind einstückig ausgebildet und weisen keinen Boden auf. Die Magnete 4, 5 bilden somit einen rechteckigen Rahmen mit einer im Wesentlichen senkrecht zu der x-y-Ebene verlaufenden Schrägfläche 9. Hinsichtlich der weiteren Funktionsweise wird auf die vorangegangenen Ausführungsbeispiele verwiesen.

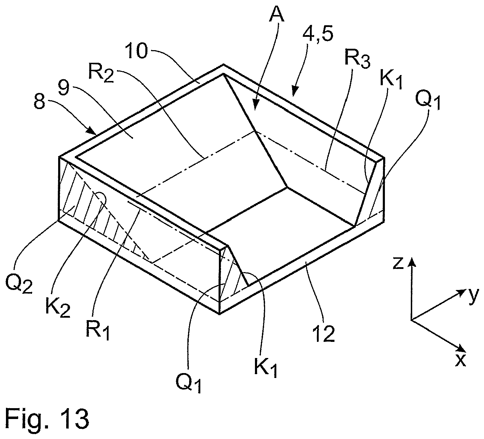

Nachfolgend wird unter Bezugnahme auf Figur 13 ein achtes Ausführungsbeispiel der Erfindung beschrieben. Im Unterschied zu den vorangegangenen Ausführungsbeispielen ist der Profilkörper 8 durch ein erstes Querschnittsprofil Q₁ mit einer ersten Innenprofilkante K₁ und ein davon abweichendes zweites Querschnittsprofil Q₂ mit einer zweiten Innenprofilkante K₂ gebildet. Die Querschnittsprofile Q₁ und Q₂ haben die Form eines Vierecks mit zwei im Wesentlichen rechten Winkeln. Die Innenprofilkanten K₁ und K₂ sind linear, wobei die Innenprofilkante K₁ im Vergleich zu der Innenprofilkante K₂ steiler verläuft. Der Profilkörper 8 ist derart gebildet, dass das erste Querschnittsprofil Q₁ in x-Richtung entlang von zwei parallelen linearen Teilstücken R₁ und R₃ und das zweite Querschnittsprofil Q₂ entlang eines senkrecht dazu verlaufenden linearen Teilstückes R₂ eines Pfades R gezogen werden. Der Pfad R hat die Form einer Rechteckhälfte. Der Übergang zwischen den Querschnittsprofilen Q₁ und Q₂ ist diskret. Hinsichtlich der weiteren Funktionsweise wird auf die vorangegangenen Ausführungsbeispiele verwiesen.

Prinzipiell gilt für die Erfindung folgendes:
Die Magnete 4, 5 sind in x-Richtung so geformt, dass eine lineare Kennlinie mit einer zulässigen maximalen Flussdichte B_{Z} innerhalb des geforderten Hubes ΔX entsteht. Die Magnete 4, 5 sind zusätzlich in y-Richtung derart geformt, dass ein Flussdichteabfall durch Querversatz ΔY innerhalb eines definierten Bereiches nicht auftritt. Durch die Formgebung in x-Richtung wird eine lineare Kennlinie der sensierten Flussdichte über den gesamten Hub ΔX und somit an jeder Stelle des Hubes ΔX eine maximale Auflösung des Wegsensors 1 erzielt. Durch die Formgebung in y-Richtung ist der Wegsensor 1 gegenüber Einbautoleranzen unempfindlich.

Die Magnete 4, 5 sind Permanentmagnete. Das weichmagnetische Material des Magnetträgers 6 ist vorzugsweise Stahl. Die Magnete 4, 5 können als Einzelmagnete oder einstückig ausgebildet sein. Der Flussdichtesensor 3 kann sowohl bei Einzelmagneten, als auch bei einer einstückigen Ausbildung außerhalb oder teileweise innerhalb des Aufnahmeraumes A angeordnet sein. Vorzugsweise steigt bei den Profilkörpern 8 die Profilhöhe zu den Außenwänden hin an. Die Magnete 4, 5 sind vorzugsweise identisch zueinander ausgebildet.

Das Querschnittsprofil Q kann eine lineare oder nichtlineare Innenprofilkante K aufweisen. Das Querschnittsprofil Q kann ein Viereck mit zwei im Wesentlichen rechten Winkeln, oder ein Dreieck sein. Der Profilkörper 8 kann durch Ziehen des Querschnittsprofils Q entlang eines Pfades in Form einer Rechteckhälfte R, eines Halbkreises H oder einer Ellipsenhälfte E gebildet sein. Entsprechendes gilt, wenn der Profilkörper 8 durch mehrere voneinander abweichende Querschnittsprofile Q₁, Q₂ gebildet ist.

## Patentansprüche

1. Magnetischer Wegsensor in einem kartesischen Koordinatensystem mit einer x-Achse, einer y-Achse und einer z-Achse, die sich in einem Ursprung schneiden, mit
- einem Magnetgeber (2), aufweisend einen ersten Magnet (4) und einen zweiten Magnet (5) zur Ausbildung eines Magnetfeldes, wobei
-- die Magnete (4, 5) in einem Ruhezustand im Wesentlichen mittig entlang einer x-Achse auf einem Magnetträger (6) angeordnet sind, wobei der Ursprung des Koordinatensystems entlang der y-Achse in der Mitte der Magnete und entlang der z-Achse auf dem Magnetträger (6) liegt und die Magnete (4, 5) auf der Seite der positiven z-Achse liegen und
-- die Magnete (4, 5) in dem Ruhezustand in der Ebene, die durch die x-Achse und die y-Achse aufgespannt wird, im Wesentlichen symmetrisch zu der y-Achse auf dem Magnetträger (6) angeordnet sind,
- einem magnetischen Flussdichtesensor (3), der in Richtung der positiven z-Achse von dem Magnetgeber (2) beabstandet ist, wobei
-- der Flussdichtesensor (3) und die Magnete (4, 5) relativ zueinander in Richtung der x-Achse entlang eines Hubes (ΔX) verschiebbar sind, und
-- der Flussdichtesensor (3) zur Messung einer in Richtung der z-Achse verlaufenden z-Komponente (B_{z}) der Flussdichte des Magnetfeldes ausgebildet ist,
**dadurch gekennzeichnet, dass**
- jeder Magnet (4, 5) in Richtung der x-Achse derart geformt ist, dass eine in Richtung der z-Achse verlaufende erste z-Abmessung (Z₁) des Magnets (4, 5) zu der y-Achse hin abnimmt, sodass die z-Komponente (B_{z}) im Bereich des Hubes (ΔX) eine im Wesentlichen lineare Kennlinie aufweist, und
- jeder Magnet (4, 5) in Richtung der y-Achse derart geformt ist, dass eine in Richtung der z-Achse verlaufende zweite z-Abmessung (Z₂) des Magneten (4, 5) zu der x-Achse hin abnimmt, sodass im Bereich eines Querversatzes (ΔY) des Flussdichtesensors (3) in Richtung der y-Achse die z-Komponente (B_{z}) im Wesentlichen konstant ist.

2. Magnetischer Wegsensor nach Anspruch 1, **dadurch gekennzeichnet, dass** jeder Magnet (4, 5) einen Profilkörper (8) aufweist, der derart gebildet ist, dass ein Querschnittsprofil (Q) in der y-z-Ebene mit einer Innenprofilkante (K) entlang einer Rechteckhälfte (R) gezogen wird.

3. Magnetischer Wegsensor nach Anspruch 1 , **dadurch gekennzeichnet, dass** jeder Magnet (4, 5) einen Profilkörper (8) aufweist, der derart gebildet ist, dass ein Querschnittsprofil (Q) in der y-z-Ebene mit einer Innenprofilkante (K) entlang eines Halbkreises (H) gezogen wird.

4. Magnetischer Wegsensor nach Anspruch 1 , **dadurch gekennzeichnet, dass** jeder Magnet (4, 5) einen Profilkörper (8) aufweist, der derart gebildet ist, dass ein Querschnittsprofil (Q) in der y-z-Ebene mit einer Innenprofilkante (K) entlang einer Ellipsenhälfte (E) gezogen wird.

5. Magnetischer Wegsensor nach einem der Ansprüche 2 bis 4, **dadurch gekennzeichnet, dass** die Innenprofilkante (K) linear ist.

6. Magnetischer Wegsensor nach einem der Ansprüche 2 bis 5, **dadurch gekennzeichnet, dass** das Querschnittsprofil (Q) ein Dreieck ist.

7. Magnetischer Wegsensor nach einem der Ansprüche 2 bis 5, **dadurch gekennzeichnet, dass** das Querschnittsprofil (Q) ein Viereck mit zwei im Wesentlichen rechten Winkeln ist.

8. Magnetischer Wegsensor nach einem der Ansprüche 2 bis 4, **dadurch gekennzeichnet, dass** die Innenprofilkante (K) nichtlinear ist.

9. Magnetischer Wegsensor nach Anspruch 8, **dadurch gekennzeichnet, dass** das Querschnittsprofil (Q) ein Viereck mit zwei im Wesentlichen rechten Winkeln ist.

10. Magnetischer Wegsensor nach Anspruch 1, **dadurch gekennzeichnet, dass** jeder Magnet (4, 5) einen Profilkörper (8) aufweist, der durch ein erstes Querschnittsprofil (Q₁) in der y-z-Ebene mit einer ersten Innenprofilkante (K₁) und ein zweites Querschnittsprofil (Q₂) in der x-z-Ebene mit einer zweiten Innenprofilkante (K₂) gebildet ist, wobei die beiden Querschnittsprofile (Q₁, Q₂) entlang von Teilstücken eines Pfades (R) aneinander grenzender Abschnitte der Magnete (4, 5) gezogen werden, wobei der Pfad (R) in einer Ebene verläuft, die parallel zur x-y-Ebene liegt.

11. Magnetischer Wegsensor nach einem der Ansprüche 2 bis 10, **dadurch gekennzeichnet, dass** der Profilkörper (8) einstückig mit einem Boden (12) ausgebildet ist.

12. Magnetischer Wegsensor nach einem der Ansprüche 1 bis 11, **dadurch gekennzeichnet, dass** die Magnete (4, 5) einstückig miteinander ausgebildet sind.

13. Magnetischer Wegsensor nach einem der Ansprüche 1 bis 12, **dadurch gekennzeichnet, dass** die Magnete (4, 5) auf einem weichmagnetischen Magnetträger (6) angeordnet sind.

14. Magnetischer Wegsensor nach einem der Ansprüche 1 bis 13, **dadurch gekennzeichnet, dass** der Flussdichtesensor (3) zumindest teilweise in einem von den Magneten (4, 5) begrenzten Aufnahmeraum (A) angeordnet ist.

## Claims

1. Magnetic position transducer in a Cartesian coordinate system with an x-axis, a y-axis and a z-axis, which intersect at an origin, comprising
- a magnetic transducer (2) comprising a first magnet (4) and a second magnet (5) for forming a magnetic field, wherein
-- the magnets (4, 5), in a rest state, are arranged substantially centred along an x-axis on a magnet carrier (6), wherein the origin of the coordinate system lies centrally between the magnets along the y-axis and on the magnet carrier (6) along the z-axis and the magnets (4, 5) lie on the side of the positive z-axis, and
-- the magnets (4, 5), in the rest state, are arranged substantially symmetrically in relation to the y-axis on the magnet carrier (6) in the plane that is spanned by the x-axis and the y-axis,
- a magnetic flux density sensor (3) which is spaced apart from the magnetic transducer (2) in the direction of the positive z-axis, wherein
-- the flux density sensor (3) and the magnets (4, 5) are displaceable relative to one another along a travel (ΔX) in the direction of the x-axis, and
-- the flux density sensor (3) is embodied to measure a z-component (B_{z}) of the flux density of the magnetic field extending in the direction of the z-axis,
**characterized in that**
- each magnet (4, 5) is formed in the direction of the x-axis in such a way that a first z-dimension (Z₁), extending in the direction of the z-axis, of the magnet (4, 5) reduces towards the y-axis such that the z-component (B_{z}) has a substantially linear characteristic in the region of the travel (ΔX), and
- each magnet (4, 5) is formed in the direction of the y-axis in such a way that a second z-dimension (Z₂), extending in the direction of the z-axis, of the magnet (4, 5) reduces towards the x-axis such that the z-component (B_{z}) is substantially constant in the region of a transverse offset (ΔY) of the flux density sensor (3) in the direction of the y-axis.

2. Magnetic position transducer according to Claim 1, **characterized in that** each magnet (4, 5) comprises a profile body (8) which is formed in such a way that a cross-sectional profile (Q) in the yz-plane is drawn with an inner profile edge (K) along a rectangle half (R).

3. Magnetic position transducer according to Claim 1, **characterized in that** each magnet (4, 5) comprises a profile body (8) which is formed in such a way that a cross-sectional profile (Q) in the yz-plane is drawn with an inner profile edge (K) along a semicircle (H).

4. Magnetic position transducer according to Claim 1, **characterized in that** each magnet (4, 5) comprises a profile body (8) which is formed in such a way that a cross-sectional profile (Q) in the yz-plane is drawn with an inner profile edge (K) along an ellipse half (E).

5. Magnetic position transducer according to any one of Claims 2 to 4, **characterized in that** the inner profile edge (K) is linear.

6. Magnetic position transducer according to any one of Claims 2 to 5, **characterized in that** the cross-sectional profile (Q) is a triangle.

7. Magnetic position transducer according to any one of Claims 2 to 5, **characterized in that** the cross-sectional profile (Q) is a quadrilateral with two substantially right angles.

8. Magnetic position transducer according to any one of Claims 2 to 4, **characterized in that** the inner profile edge (K) is nonlinear.

9. Magnetic position transducer according to Claim 8, **characterized in that** the cross-sectional profile (Q) is a quadrilateral with two substantially right angles.

10. Magnetic position transducer according to Claim 1, **characterized in that** each magnet (4, 5) comprises a profile body (8), which is formed by a first cross-sectional profile (Q₁) in the yz-plane with a first inner profile edge (K₁) and by a second cross-sectional profile (Q₂) in the xz-plane with a second inner profile edge (K₂), wherein the two cross-sectional profiles (Q₁, Q₂) are drawn along portions of a path (R) of adjoining sections of the magnets (4, 5), wherein the path (R) extends in a plane that lies parallel to the xy-plane.

11. Magnetic position transducer according to any one of Claims 2 to 10, **characterized in that** the profile body (8) has an integral embodiment with a base (12).

12. Magnetic position transducer according to any one of Claims 1 to 11, **characterized in that** the magnets (4, 5) have an integral embodiment with one another.

13. Magnetic position transducer according to any one of Claims 1 to 12, **characterized in that** the magnets (4, 5) are arranged on a soft-magnetic magnet carrier (6).

14. Magnetic position transducer according to any one of Claims 1 to 13, **characterized in that** the flux density sensor (3) is arranged, at least in part, in a recording space (A) that is delimited by the magnets (4, 5).

## Revendications

1. Capteur de déplacement magnétique dans un système de coordonnées cartésien avec un axe x, un axe y et un axe z, qui se coupent à une origine, avec
- un émetteur magnétique (2), présentant un premier aimant (4) et un deuxième aimant (5) pour la formation d'un champ magnétique, dans lequel
-- les aimants (4, 5) dans un état de repos sont disposés essentiellement au milieu le long d'un axe x sur un support d'aimants (6), dans lequel l'origine du système de coordonnées le long de l'axe y se situe au milieu des aimants (4, 5) et le long de l'axe z sur le support d'aimants (6) et les aimants (4, 5) sont situés sur le côté positif de l'axe z, et
-- les aimants (4, 5) dans l'état de repos sont disposés sur le support d'aimants (6) dans le plan, qui est défini par l'axe x et l'axe y, de façon essentiellement symétrique par rapport à l'axe y,
- un capteur de densité de flux magnétique (3) qui est espacé de l'émetteur magnétique (2) dans la direction de l'axe z positif, dans lequel
-- le capteur de densité de flux (3) et les aimants (4, 5) sont déplaçables les uns par rapport aux autres dans la direction de l'axe x le long d'une course (ΔX), et
-- le capteur de densité de flux (3) est réalisé pour la mesure d'une composante z (B_{z}) de la densité de flux du champ magnétique, s'étendant dans la direction de l'axe z,
**caractérisé en ce que**
- chaque aimant (4, 5) est formé dans la direction de l'axe x, de telle manière qu'une dimension z (Z₁) de l'aimant (4, 5) s'étendant dans la direction de l'axe z diminue en direction de l'axe y, de telle manière que la composante z (B_{z}) présente une ligne caractéristique essentiellement linéaire dans la région de la course (ΔX), et
- chaque aimant (4, 5) est formé dans la direction de l'axe y, de telle manière qu'une deuxième dimension z (Z₂) des aimants (4, 5) s'étendant dans la direction de l'axe z diminue en direction de l'axe x, de telle manière que la composante z (B_{z}) soit essentiellement constante dans la région d'un décalage transversal (ΔY) du capteur de densité de flux (3) dans la direction de l'axe y.

2. Capteur de déplacement magnétique selon la revendication 1, **caractérisé en ce que** chaque aimant (4, 5) présente un corps profilé (8), qui est formé de telle manière qu'un profil de section transversale (Q) soit tracé dans le plan y-z avec une arête de profil intérieure (K) le long d'un demi-rectangle (R).

3. Capteur de déplacement magnétique selon la revendication 1, **caractérisé en ce que** chaque aimant (4, 5) présente un corps profilé (8), qui est formé de telle manière qu'un profil de section transversale (Q) soit tracé dans le plan y-z avec une arête de profil intérieure (K) le long d'un demi-cercle (H).

4. Capteur de déplacement magnétique selon la revendication 1, **caractérisé en ce que** chaque aimant (4, 5) présente un corps profilé (8), qui est formé de telle manière qu'un profil de section transversale (Q) soit tracé dans le plan y-z avec une arête de profil (K) le long d'une demi-ellipse (E).

5. Capteur de déplacement magnétique selon l'une quelconque des revendications 2 à 4, **caractérisé en ce que** l'arête de profil intérieure (K) est linéaire.

6. Capteur de déplacement magnétique selon l'une quelconque des revendications 2 à 5, **caractérisé en ce que** le profil de section transversale (Q) est un triangle.

7. Capteur de déplacement magnétique selon l'une quelconque des revendications 2 à 5, **caractérisé en ce que** le profil de section transversale (Q) est un quadrilatère avec deux angles essentiellement droits.

8. Capteur de déplacement magnétique selon l'une quelconque des revendications 2 à 4, **caractérisé en ce que** l'arête de profil intérieure (K) n'est pas linéaire.

9. Capteur de déplacement magnétique selon la revendication 8, **caractérisé en ce que** le profil de section transversale (Q) est un quadrilatère avec deux angles essentiellement droits.

10. Capteur de déplacement magnétique selon la revendication 1, **caractérisé en ce que** chaque aimant (4, 5) présente un corps profilé (8), qui est formé par un premier profil de section transversale (Q₁) dans le plan y-z avec une première arête de profil intérieure (K₁) et un deuxième profil de section transversale (Q₂) dans le plan x-z avec une deuxième arête de profil intérieure (K₂), dans lequel les deux profils de section transversale (Q₁, Q₂) sont tracés le long de tronçons d'un chemin (R) de parties adjacentes l'une à l'autre des aimants (4, 5), dans lequel le chemin (R) court dans un plan, qui est parallèle au plan x-y.

11. Capteur de déplacement magnétique selon l'une quelconque des revendications 2 à 10, **caractérisé en ce que** le corps profilé (8) est formé d'une seule pièce avec un fond (12).

12. Capteur de déplacement magnétique selon l'une quelconque des revendications 1 à 11, **caractérisé en ce que** les aimants (4, 5) sont formés d'une seule pièce l'un avec l'autre.

13. Capteur de déplacement magnétique selon l'une quelconque des revendications 1 à 12, **caractérisé en ce que** les aimants (4, 5) sont disposés sur un support d'aimants magnétique doux (6).

14. Capteur de déplacement magnétique selon l'une quelconque des revendications 1 à 13, **caractérisé en ce que** le capteur de densité de flux (3) est disposé au moins en partie dans une chambre de réception (A) limitée par les aimants (4, 5).
